# EUROPÄISCHE PATENTANMELDUNG

(11) **EP 3 147 651 A1**
(43) Veröffentlichungstag der Anmeldung: **29.03.2017**
(21) Anmeldenummer: 16189737.6
(22) Anmeldetag: 20.09.2016
(51) Int. Cl.: G01N 21/64, G02B 1/00

(54) **SENSORELEMENT FÜR PHOTOLUMINESZENZ-MESSUNGEN, PHOTOLUMINESZENZ-DETEKTIONSEINRICHTUNG, VERFAHREN ZUM BETREIBEN EINER PHOTOLUMINESZENZ-DETEKTIONSEINRICHTUNG, VERFAHREN ZUR HERSTELLUNG EINES SENSORELEMENTS, UND VERWENDUNG EINES SENSORELEMENTS**

(30) Priorität: 24.09.2015 DE 102015218422
(71) Anmelder: Universität Stuttgart, 70174 Stuttgart (DE)
(72) Erfinder: Bogner, Martin, 83052 Bruckmühl-Waldheim (DE); Frenner, Karsten, 71229 Leonberg (DE); Sägebarth, Joachim, 71296 Heimsheim (DE)
(74) Vertreter: Kordel, Mattias

(57) **Zusammenfassung**

Die Erfindung betrifft ein Sensorelement (11) für Photolumineszenz-Messungen, mit einer optisch durchlässigen Trägerstruktur (19), auf der eine Lumineszenzstruktur (21) angeordnet ist, die eingerichtet ist zur Intensivierung und zur Weiterleitung von Lumineszenzlicht an die Trägerstruktur (19), wobei die Lumineszenzstruktur eine der Trägerstruktur (19) abgewandte, nanostrukturierte Oberfläche (25) aufweist.

## Beschreibung

Die Erfindung betrifft ein Sensorelement für Photolmnineszenz-Messungen, eine Photolumineszenz-Detektionseinrichtung, ein Verfahren zum Betreiben einer Photolumineszenz-Detektionseinrichtung, ein Verfahren zur Herstellung eines Sensorelements, und eine Verwendung eines Sensorelements für Photolumineszenz-Messungen.

Photolumineszenz-Biosensoren sind bisher nur für den Nachweis mit einem einzigen, spezifischen Sensorelement eingerichtet. Sollen andere Sensoren verwendet werden, muss eine optische Filteranordnung zur Filterung von Lumineszenz- und Anregungslicht, in manchen Fällen zusätzlich aber auch eine Lichtquelle zur Lumineszenz-Anregung angepasst werden. Entsprechende Einrichtungen zur Photolumineszenz-Messung sind daher inflexibel und schwer auf verschiedene nachzuweisende Substanzen und/oder verschiedene Messmethoden einstellbar. Problematisch ist weiterhin, dass Stoffe, welche intrinsisch nur eine schwache Lichtemission aufweisen, beispielsweise im Fall intrinsischer Fluorophore, häufig nur unzureichende Fluoreszenzsignalintensitäten produzieren. In solchen Fällen muss auf Fluoreszenzmarker zurückgegriffen werden, was Veränderungen der zu untersuchenden Stoffe mit sich bringt, oder es muss auf eine Erhöhung der Intensität des Anregungslichts zurückgegriffen werden. Hierbei ist es allerdings möglich, dass die Fluorophore beschädigt und deren Ausbleichen beschleunigt werden. Außerdem ist dann das Hintergrundlicht sehr intensiv, was letztlich die Signalintensität reduziert und/oder ein schlechtes Verhältnis von Signal zu Rauschen zufolge hat. Weiterhin können mit herkömmlichen Methoden nur vergleichsweise große Stoffmengen analysiert werden. Da die Methoden inflexibel und sehr spezifisch sind, ist es kaum möglich, mehrere Stoffe gleichzeitig nachzuweisen. Eine Auswahl spezifisch angepasster, externer Filtersysteme und/oder speziell angepasster Beleuchtungen ist aufwändig und teuer.

Der Erfindung liegt die Aufgabe zugrunde, ein Sensorelement für Photolumineszenz-Messungen, eine Photolumineszenz-Detektionseinrichtung, ein Verfahren zum Betreiben einer Photolumineszenz-Detektionseinrichtung, ein Verfahren zur Herstellung eines Sensorelements, und eine Verwendung eines Sensorelements für Photolumineszenz-Messungen zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Sensorelement für Photolumineszenz-Messungen geschaffen wird, welches eine optisch durchlässige Trägerstruktur aufweist, auf welcher eine Lumineszenzstruktur angeordnet ist, die eingerichtet ist zur Intensivierung und zur Weiterleitung von Lumineszenzlicht an die Trägerstruktur, wobei die Lumineszenzstruktur eine der Trägerstruktur abgewandte nanostrukturierte Oberfläche aufweist. Mittels der nanostrukturierten Oberfläche ist es insbesondere möglich, eine von auf der Oberfläche angeordneten Lumineszenzzentren, insbesondere Fluorophoren, emittierte Strahlungsintensität - vorzugsweise über plasmonische Resonanzen - zu erhöhen, wobei insbesondere evaneszente Wellen in die Lumineszenzstruktur über die nanostrukturierte Oberfläche eingekoppelt werden können. Das an der nanostrukturierten Oberfläche intensivierte Lumineszenzlicht wird - insbesondere in Form evaneszenter Wellen - von der Lumineszenzstruktur an die Trägerstruktur weitergeleitet und dort bevorzugt ausgekoppelt. Es kann so eine sehr hohe Verstärkung der Lumineszenzintensität bis zu einem Bereich von 10⁷ an der nanostrukturierten Oberfläche erzielt werden, sodass auch schwache Fluorophore ohne übermäßige Erhöhung oder überhaupt ohne Erhöhung der von einer Strahlungsquelle eingestrahlten Intensität des Anregungslichts und damit ohne Gefährdung der Fluorophore nachgewiesen werden können. Weiterhin können sehr geringe Stoffmengen, beispielsweise in einem sehr geringen Volumen von bis zu 10⁻¹² m³ analysiert werden. Das Sensorelement ist außerdem sehr einfach aufgebaut, kostengünstig herstellbar und leicht ersetzbar. Es kann daher abhängig von konkret durchzuführenden Messungen und/oder nachzuweisenden Stoffen in einfacher Weise ausgetauscht werden. Insbesondere kann das Sensorelement als Wegwerfsensor ausgebildet sein, also als Einmalsensor zur einmaligen Verwendung. Es ist dann in sehr schneller und flexibler Weise möglich, eine Vorrichtung, welche das Sensorelement verwendet, durch Auswahl eines geeigneten Sensorelements auf eine konkrete analytische Aufgabe hin einzurichten. Das Sensorelement kann ein geringes Analysevolumen aufweisen.

Unter einer Trägerstruktur wird insbesondere eine Struktur verstanden, welche eingerichtet ist, um eine tragende Unterstützung für die Lumineszenzstruktur bereitzustellen, sodass die Lumineszenzstruktur auf der Trägerstruktur angeordnet werden kann.

Unter einer Lumineszenzstruktur wird insbesondere eine Struktur verstanden, die einerseits geeignet ist, um im Bereich einer Oberfläche der Lumineszenzstruktur entstehende Lumineszenz zu intensivieren und andererseits Lumineszenzlicht - vorzugsweise in Form evaneszenter Wellen - an eine der Oberfläche, an welcher die Lumineszenz entsteht, gegenüberliegende Oberfläche weiterzuleiten.

Unter einer "Intensivierung" von Lumineszenzlicht oder Lumineszenzstrahlung wird hier insbesondere eine Erhöhung der Intensität der Lumineszenzstrahlung oder des Lumineszenzlichts unabhängig von dem konkreten Mechanismus der Intensitätserhöhung verstanden. Es ist möglich, dass durch die Nanostruktur der nanostrukturierten Oberfläche gezielt wenigstens eine spezifische Anregungswellenlänge verstärkt wird, wobei insbesondere in ihrer Intensität überhöhte, stehende Wellen erzeugt werden können. Die derart erhöhte Anregungsintensität führt zugleich zu einer Erhöhung des Lumineszenzsignals. Alternativ oder zusätzlich ist es möglich, dass die Lumineszenzstrahlung selbst verstärkt wird, beispielsweise durch die Verstärkung der evaneszenten Anteile der Lumineszenzstrahlung. Besonders bevorzugt wird eine Strahlungsintensitätserhöhung durch plasmonische Kopplung oder plasmonische Resonanz wie bei einer idealen Pendry-Linse, und ganz besonders bevorzugt durch den Effekt der metallverstärkten-Fluoreszenz (metal enhanced fluorescence - MEF) erzielt.

Die Lumineszenzstruktur, die bevorzugt als wenigstens eine dünne Metallschicht, vorzugsweise als wenigstens zwei dünne Metallschichten, ausgebildet ist, wirkt zum einen auf die Lumineszenzstrahlung intensivierend und zugleich dämpfend für breitbandiges Anregungslicht und Streulicht. Dabei ist die Lumineszenzstruktur besonders bevorzugt als Pendry-Linse ausgebildet. Bei einem bevorzugten Ausführungsbeispiel ist die Lumineszenzstruktur zumindest bereichsweise als Material mit negativer Brechzahl ausgebildet oder weist ein Metamaterial auf. Ein Metamaterial ist dabei insbesondere eine künstlich hergestellte Struktur, deren Durchlässigkeit für elektrische und magnetische Felder von der in der Natur üblichen abweicht. Das wird erreicht durch speziell angefertigte, meist periodische, mikroskopisch feine Strukturen, insbesondere Zellen oder Einzelelemente, aus elektrischen oder magnetisch wirksamen Materialien in ihrem Inneren.

Ein Material, das eine Brechzahl von -1 besitzt (Wesselago-Medium) ermöglicht die Herstellung einer planaren Linse, die nicht an die Auflösungsbegrenzung der klassischen Optik gebunden ist. Eine solche Linse, die auch als Pendry-Linse bezeichnet wird, ist im einfachsten Fall eine planare Schicht eines solchen Materials. Bestimmungsgemäße Anwendung einer Pendry-Linse ist insbesondere die Abbildung von Strukturen mit Strukturgrößen unterhalb der Wellenlänge. Notwendige Bedingung für eine solche Abbildung ist eine Verstärkung von evaneszenten Wellen eines betrachteten Objektes. Im Rahmen der Erfindung wird die Pendry-Linse vorzugsweise nicht zur Abbildung, sondern zur Verstärkung von evaneszenten Wellen benutzen. Allerdings existiert ein solches Wesselago-Medium in der Natur nicht. In vielen Metallen - insbesondere Ag, Au, Cu - lassen sich aber bei optischen Frequenzen kollektive Oberflächen-Ladungsverschiebungen (Plasmonen) durch evaneszente Wellen anregen. Pendry hat gezeigt, dass bei Anwesenheit von Plasmonen zwar nicht die Brechzahl, aber zumindest die Dieelektrizitätszahl -1 werden kann, was zumindest für eine einfache Abbildung und/oder Verstärkung ausreicht (Pendry, J. B. (Oct 2000), Negative Refraction Makes a Perfect Lens, Phys. Rev. Lett., 85, 3966-3969). Der Verstärkungsmechanismus kann als eine resonante Kopplung von Plasmonen auf beiden Oberflächen des Materials erklärt werden. Problematisch bei solchen Metallschichten ist, dass sie absorbieren, weshalb sie für eine Linse möglichst dünn ausgestaltet sein sollten. Die mit der Absorption einhergehende Dämpfung ist erfindungsgemäß allerdings für das Anregungslicht gewollt, wobei ein Kompromiss zwischen der Schichtdicke einerseits und der Verstärkung andererseits angestrebt wird. Bei Silber als Material für die Lumineszenzstruktur wird die Schichtdicke bevorzugt zwischen 30 nm bis 50 nm gewählt, was einer Verstärkung von einem Faktor 100 für das Nutzlicht und einer Dämpfung von einem Faktor 10000 bis 20000 für das Streulicht entspricht.

Im Rahmen der Erfindung wird also insbesondere eine Kombination einer Kopplung von Fluoreszenz mit Oberflächenplasmonen, Pendry-Linsen, rigoroser Beugungstheorie und geometrischer Optik angewendet, wobei durch diese Kombination eine selektive Verstärkung einer spezifischen Anregungswellenlänge und des entstehenden Lumineszenzlichts bei gleichzeitiger Dämpfung des Streulichts und des unverstärkten, breitbandigen Anregungslichts erreicht werden kann.

Unter dem Begriff "Lumineszenz" wird hier generell das Phänomen eines strahlenden Übergangs eines Stoffs von einem ersten Zustand höherer Energie in einen zweiten Zustand niedrigerer Energie unter Emission wenigstens eines Photons verstanden. Bei dem Stoff kann es sich insbesondere um ein Molekül, um ein Atom, um ein Komplex, um ein Ion, oder um eine andere geeignete physikalische Einheit handeln. Der Begriff "Lumineszenz" umfasst insbesondere die Phänomene der Fluoreszenz, der Phosphoreszenz, der Chemilumineszenz und der Biolumineszenz. Besonders bevorzugt ist im Kontext der Erfindung unter Lumineszenz Fluoreszenz zu verstehen.

Unter einer nanostrukturierten Oberfläche wird eine Oberfläche verstanden, welche eine Struktur aufweist, deren relevante Abmessungen, insbesondere Abmessungen von einzelnen Strukturelementen der Struktur, eine charakteristische Länge auf der Nanometerskala aufweisen, insbesondere im Bereich von wenigen 10 nm bis wenigen 100 nm, besonders bevorzugt in dem Bereich der Größenordnung der Wellenlänge einer zu beobachtenden elektromagnetischen Strahlung, insbesondere von sichtbarem Licht. Die nanostrukturierte Oberfläche kann als Nanostrukturen oder Strukturelemente beispielsweise Erhebungen, Vertiefungen, insbesondere Kavitäten, oder andere geeignete Strukturelemente aufweisen. Die Struktur der nanostrukturierten Oberfläche ist bevorzugt periodisch oder quasi-periodisch, gegebenenfalls mit geringfügigen Abweichungen von der strengen Periodizität insbesondere zur Unterdrückung unerwünschter Resonanzeffekte, ausgebildet. Es ist aber auch eine aperiodische Struktur möglich.

Die nanostrukturierte Oberfläche ist vorzugsweise metallisch ausgebildet, sie weist insbesondere bevorzugt wenigstens ein Metall oder wenigstens eine Metalllegierung auf. Allgemein wird für die nanostrukturierte Oberfläche, vorzugsweise für die Lumineszenzstruktur, ein Material bevorzugt, welches plasmonische Resonanzen aufweisen kann. Als Materialien für die nanostrukturierte Oberfläche und/oder die Lumineszenzstruktur kommen insbesondere Silber, Gold, Kupfer oder Aluminium infrage.

Die nanostrukturierte Oberfläche ist bezüglich ihrer charakteristischen Abmessungen der Strukturelemente bevorzugt auch abgestimmt auf bestimmte, zu verstärkende Wellenlängenbereiche der Anregungsstrahlung und/oder der Lumineszenzstrahlung. Insbesondere ist also die nanostrukturierte Oberfläche bevorzugt in Hinblick auf ihre Nanostruktur wellenlängenabhängig abgestimmt. Es ist dann möglich, dass das Sensorelement spezifisch zur Verstärkung eines bestimmten Wellenlängenbereichs ausgebildet ist.

Es ist auch möglich, dass die Nanostruktur auf der nanostrukturierten Oberfläche entlang der nanostrukturierten Oberfläche variiert, sodass sie in verschiedenen Oberflächenbereichen der nanostrukturierten Oberfläche auf verschiedene Wellenlängenbereiche abgestimmt ist. Es ist insbesondere in einem solchen Fall möglich, mit dem Sensorelement in verschiedenen Bereichen verschiedene Stoffe zu analysieren und/oder verschiedene Photolumineszenz-Messungen durchzuführen.

Verschiedene Sensorelemente, bei denen die nanostrukturierte Oberfläche jeweils auf verschiedene Wellenlängenbereiche abgestimmt ist, können in einfacher und kostengünstiger Weise gegeneinander getauscht werden, sodass sehr flexibel und schnell verschiedene Photolumineszenz-Messungen mittels der Sensorelemente durchführbar sind.

Es wird ein Ausführungsbeispiel des Sensorelements bevorzugt, das sich dadurch auszeichnet, dass es einen Schichtaufbau aufweist. Dabei wird unter einem Schichtaufbau allgemein eine Anordnung von wenigstens zwei Schichten übereinander oder nebeneinander verstanden. Bevorzugt bildet dabei die Trägerstruktur wenigstens eine erste Sensorschicht, wobei die Lumineszenzstruktur wenigstens eine zweite Sensorschicht bildet. Alternativ oder zusätzlich ist die Trägerstruktur als wenigstens eine erste Sensorschicht ausgebildet, wobei die Lumineszenzstruktur als wenigstens eine zweite Sensorschicht ausgebildet ist. Die Trägerstruktur wird in diesem Fall auch als Trägerschicht bezeichnet, die Lumineszenzstruktur auch als Lumineszenzschicht. Der Schichtaufbau ist vorzugsweise lithographisch und/oder durch einen Prägeprozess herstellbar, insbesondere lithographisch und/oder durch einen Prägeprozess hergestellt. Auf diese Weise ist das Sensorelement sehr kostengünstig und einfach aufgebaut und herstellbar. Somit ist es insbesondere ohne weiteres möglich, das Sensorelement gegen ein anderes Sensorelement auszutauschen, um verschiedene Stoffe zu analysieren und/oder verschiedene Photolumineszenz-Messungen durchzuführen.

Vorzugsweise weist das Sensorelement ein Analysesystem für die stoffliche Analytik und ein Filtersystem für die optische Filterung von Lumineszenzlicht in integraler Weise miteinander auf. Dabei dient bevorzugt insbesondere die Lumineszenzstruktur sowohl der stofflichen Analyse als auch der optischen Filterung. Für die stoffliche Analyse umfasst ein Analysesystem, vorzugsweise die Lumineszenzstruktur, bevorzugt Reaktanden, welche mit einem zu analysierenden Stoff reagieren oder den zu analysierenden Stoff in anderer Weise, beispielsweise durch einen Sorptionsmechanismus, insbesondere für Physisorption durch van-der-Waals-Kräfte, oder in anderer geeigneten Weise, binden. Es ist möglich, dass das Analysesystem so ausgelegt ist, dass Lumineszenz erst dann auftritt, wenn ein zu analysierender Stoff mit einem Reaktanden reagiert hat oder an den Reaktanden gebunden ist. Es ist aber auch möglich, dass nicht gebundene Stoffe von der Lumineszenzschicht abspült werden, wobei danach nur gebundene Stoffe mittels einer Photolumineszenz-Messung nachgewiesen werden. Das Filtersystem wird durch die Lumineszenzstruktur bevorzugt dadurch bereitgestellt, dass die nanostrukturierte Oberfläche zur Verstärkung bestimmter Anregungs- und/oder Lumineszenzwellenlängen eingerichtet ist. Hierüber kann eine sehr hohe Lumineszenzverstärkung einerseits und vorzugsweise eine sehr scharfe Trennung von Anregungslicht und Lumineszenzlicht andererseits verwirklicht werden. Dies ermöglicht wiederum den einfachen und kostengünstigen Einsatz einer breitbandigen Strahlungsquelle für die Photolumineszcnz-Messung. Dadurch, dass das Analysesystem und das Filtersystem integral miteinander in dem Sensorelement vorgesehen sind, sind diese bei bekannten Einrichtungen für Photolumineszenz-Messungen typischerweise sehr teuren Elemente hier in kostengünstiger Weise herstellbar und an dem austauschbaren Sensorelement angeordnet. Eine Einrichtung für Photolumineszenz-Messungen, welche das Sensorelement verwendet, braucht daher kein komplexes und teures optisches Filtersystem mehr aufzuweisen und kann insgesamt preiswerter ausgebildet sein. Außerdem werden die gemäß der hier vorgeschlagenen Ausgestaltung preiswerten Analyse- und Filtersysteme dem austauschbaren Sensorelement zugeordnet, während teurere Elemente einer Photolumineszenz-Detektionseinrichtung, wie beispielsweise eine Strahlungsquelle und eine Detektoreinrichtung zur Detektion elektromagnetischer Strahlung, fest an der Detektionseinrichtung vorgesehen sein können. Das Sensorelement ist dann bedarfsgerecht austauschbar, wodurch insgesamt die Detektionseinrichtung sehr flexibel und kostengünstig betreibbar wird.

Es wird auch ein Ausführungsbeispiel des Sensorelements bevorzugt, das sich dadurch auszeichnet, dass im Bereich der nanostrukturierten Oberfläche der Lumineszenzstruktur reaktive Lumineszenzzentren angeordnet sind. Auf diese Weise ist die Lumineszenzstruktur insbesondere als Analysesystem ausgestaltet. Mittels der reaktiven Lumineszenzzentren ist insbesondere eine stoffliche Analytik in einfacher und kostengünstiger Weise möglich.

Unter einem reaktiven Lumineszenzzentrum wird insbesondere ein Stoff - insbesondere ein Molekül oder ein Komplex - verstanden, der eingerichtet ist, um mit einem zu untersuchenden Stoff zu reagieren oder den zu untersuchenden Stoff zu binden, und in Kombination mit dem zu untersuchenden Stoff - insbesondere nach der Reaktion und/oder der Bindung des zu untersuchenden Stoffs an das Lumineszenzzentrum - Lumineszenzstrahlung zu emittieren und/oder emittierte Lumineszenzstrahlung zu verändern. Vorzugsweise handelt es sich bei den reaktiven Lumineszenzzentren um Analyten, vorzugsweise um Fluorophore.

Gemäß einer Ausgestaltung des Sensorelements sind die reaktiven Lumineszenzzentren zumindest teilweise an der nanostrukturierten Oberfläche immobilisiert, vorzugsweise durch kovalente Bindungen. Alternativ oder zusätzlich ist es möglich, dass die reaktiven Lumineszenzzentren zumindest teilweise in einem auf der nanostrukturierten Oberfläche angeordneten Matrixmaterial dispergiert sind. Dabei wird unter dem Begriff "dispergiert" eine Verteilung, insbesondere eine stochastische Verteilung, der Lumineszenzzentren in dem Matrixmaterial verstanden. Unter einem Matrixmaterial wird ein Material verstanden, welches einerseits geeignet ist, die reaktiven Lumineszenzzentren in dispergierter, insbesondere stochastisch verteilter Form zu halten, wobei es andererseits eingerichtet ist, um eine Diffusion eines zu analysierenden Stoffs in das Matrixmaterial hinein und zu den reaktiven Lumineszenzzentren zu ermöglichen. Dabei ist bevorzugt vorgesehen, dass das Matrixmaterial spezifisch auf eine Diffusion von nachzuweisenden Stoffen abgestimmt ist. Insbesondere kann durch geeignete Wahl von Diffusionskoeffizienten, insbesondere durch eine geeignete Wahl der Zusammensetzung und/oder Ausbildung des Matrixmaterials, insbesondere speziellen Porengrößen oder dem Einsatz von polaren Matrix-Molekülen, eine Ionenselektivität des Matrixmaterials eingestellt werden.

Es wird auch ein Ausführungsbeispiel des Sensorelements bevorzugt, das sich dadurch auszeichnet, dass die nanostrukturierte Oberfläche Nanokavitäten aufweist. Bevorzugt sind die Nanokavitäten periodisch oder quasi-periodisch, gegebenenfalls mit geringfügigen Abweichungen von der strengen Periodizität insbesondere zur Unterdrückung unerwünschter Resonanzeffekte, angeordnet. Es ist aber auch eine aperiodische Anordnung möglich. Unter dem Begriff "Nanokavität" wird insbesondere eine Vertiefung in der nanostrukturierten Oberfläche verstanden, welche eine charakteristische Ausdehnung, insbesondere eine charakteristische Tiefe - gemessen von einer Oberfläche, insbesondere von einer mittleren Oberfläche oder von einer äußersten Oberfläche, und/oder ein Breitenmaß, insbesondere einen Durchmesser, auf der Nanometerskala aufweisen. Solche Nanokavitäten können verschiedene geometrische Formen aufweisen, insbesondere können sie als im Querschnitt quadratische oder rechteckförmige, runde, insbesondere kreisförmige oder ovale, oder anderweitig berandete Ausnehmungen in der nanostrukturierten Oberfläche ausgebildet sein.

Nanokavitäten sind besonders geeignet zur insbesondere wellenlängenselektiven Verstärkung von elektromagnetischer Strahlung, wobei eine charakteristische Kombination von Länge, insbesondere Tiefe, Periodizität und Breitenmaß der Nanokavitäten auf eine zu verstärkende Wellenlänge abgestimmt werden kann. Weiterhin sind solche Nanokavitäten in besonderer Weise geeignet, um einen zu untersuchenden Stoff zu halten, insbesondere einzufangen oder zu fixieren.

Vorzugsweise ist vorgesehen, dass die reaktiven Lumineszenzzentren zumindest teilweise in den Nanokavitäten angeordnet sind. Dabei ist es möglich, dass die reaktiven Lumineszenzzentren zumindest teilweise an Wandungen oder an einem Boden der Nanokavitäten immobilisiert sind, insbesondere durch kovalente Bindungen, und/oder dass in den Nanokavitäten ein Matrixmaterial angeordnet ist, wobei die reaktiven Lumineszenzzentren zumindest teilweise in dem in den Nanokavitäten angeordneten Matrixmaterial dispergiert sind.

In den Nanokavitäten herrschen insbesondere Bedingungen zur Ausbildung von stehenden Wellen elektromagnetischer Strahlung, was zu einer hohen Intensivierung der Lumineszenz führt, insbesondere wenn die Lumineszenzstrahlung in den Nanokavitäten entsteht, beispielsweise weil hier reaktive Lumineszenzzentren angeordnet sind.

Es wird auch ein Ausführungsbeispiel des Sensorelements bevorzugt, das sich dadurch auszeichnet, dass auf der Lumineszenzstruktur eine Fluidführungsstruktur angeordnet ist, die eingerichtet ist zur Führung eines Fluids über die nanostrukturierte Oberfläche. Unter einer Fluidführungsstruktur wird hier insbesondere eine Struktur verstanden, die eingerichtet ist, um ein Fluid, insbesondere eine Lösung, welche einen zu analysierenden Stoff aufweist, über die nanostrukturierte Oberfläche zu leiten und dabei insbesondere im Bereich der nanostrukturierten Oberfläche zu halten. Die Fluidführungsstruktur ist vorzugsweise als Führungsschicht ausgebildet, wobei sie besonders bevorzugt integral mit der Trägerstruktur und der Lumineszenzstruktur ausgebildet ist, insbesondere als dritte Schicht über der Lumineszenzstruktur. Es ist möglich, dass die Fluidführungsstruktur lithographisch, insbesondere als weitere Schicht des Schichtaufbaus des Sensorelements, ausgebildet ist. Bevorzugt wird die Führungsstruktur aus Kunststoff gebildet, wobei sie Kunststoff aufweist oder aus Kunststoff besteht.

Das Sensorelement weist vorzugsweise Anschlüsse auf, insbesondere einen Zulauf für ein Fluid zu der Fluidführungsstruktur und/oder einen Ablauf für das Fluid von der Fluidführungsstruktur weg. Auch diese Anschlüsse sind bevorzugt lithographisch herstellbar.

Die Fluidführungsstruktur ist vorzugsweise optisch durchlässig ausgestaltet, sodass insbesondere von einer Strahlungsquelle ausgehende elektromagnetische Strahlung durch die Führungsstruktur zu der Lumineszenzstruktur gelangen kann.

Mittels der Fluidführungsstruktur ist es möglich, einen zu analysierenden Stoff, insbesondere eine Lösung eines zu analysierenden Stoffs, über die Lumineszenzstruktur und insbesondere über die nanostrukturierte Oberfläche zu führen, und so den zu analysierenden Stoff mit der nanostrukturierten Oberfläche und insbesondere mit den reaktiven Lumineszenzzentren in Kontakt zu bringen.

Das Sensorelement weist bevorzugt - insbesondere in dieser Reihenfolge über- oder nebeneinander - die Trägerstruktur, die Lumineszenzstruktur und die Fluidführungsstruktur auf, wobei sie insbesondere als Schichtaufbau realisiert sein kann, wobei die Schichten integral miteinander und vorzugsweise lithographisch und/oder durch einen Prägeprozess ausgebildet werden. Auf diese Weise kann das Sensorelement sehr kostengünstig und einfach als Austausch- oder Einwegteil ausgebildet sein.

Es wird ein Ausführungsbeispiel des Sensorelements bevorzugt, das sich dadurch auszeichnet, dass die Lumineszenzstruktur eine erste Lumineszenzschicht aufweist, welche die nanostrukturierte Oberfläche aufweist. Die Lumineszenzstruktur weist bevorzugt eine zweite Lumineszenzschicht auf, die auf der Trägerstruktur angeordnet ist. Es ergibt sich somit bevorzugt der folgende Schichtaufbau: Zunächst die Trägerstruktur der Trägerschicht, hierauf die zweite Lumineszenzschicht, und auf dieser wiederum die erste Lumineszenzschicht, welche die nanostrukturierte Oberfläche aufweist. Die erste Lumineszenzschicht weist vorzugsweise ein Material auf, welches von einem Material der zweiten Lumineszenzschicht verschieden ist. Es ist aber auch möglich, dass die zweite Lumineszenzschicht und die erste Lumineszenzschicht das gleiche oder dasselbe Material aufweisen oder aus einem gleichen oder selben Material bestehen. Insbesondere dann, wenn die erste Lumineszenzschicht und die zweite Lumineszenzschicht verschiedene Materialien aufweisen, ist zwischen der ersten Lumineszenzschicht und der zweiten Luminsezenzschicht bevorzugt eine Zwischenschicht aus einem dritten Material angeordnet, insbesondere als so genanntes Material-Interface. Hierdurch können unerwünschte Reaktionen der verschiedenen Materialien der beiden Lumineszenzschichten miteinander vermieden werden. Eine Aufteilung der Lumineszenzstruktur in eine erste Lumineszenzschicht mit der nanostrukturierten Oberfläche und in eine zweite Lumineszenzschicht ermöglicht insbesondere eine Trennung der Funktionen der stofflichen Analytik und der Lumineszenzerzeugung einerseits sowie der Durchleitung und Filterung des Lumineszenzlichts zu der Trägerstruktur andererseits. Während die erste Lumineszenzschicht insbesondere für die stoffliche Analytik und die Intensivierung sowie Einkopplung der auf der nanostrukturierten Oberfläche erzeugten Lumineszenzstrahlung ist, ist die zweite Lumineszenzschicht abgestimmt auf eine effiziente Weiterleitung, Verstärkung und Filterung der Lumineszenzstrahlung, insbesondere in Form evaneszenter Wellen. Weiterhin ist die zweite Lumineszenzschicht bevorzugt eingerichtet zur Weiterleitung der Lumineszenzstrahlung an die Trägerstruktur, wobei insbesondere beim Übergang von der zweiten Luminsezenzschicht in die Trägerstruktur eine Auskopplung der evaneszenten Wellen als frei in der Trägerstruktur propagierende Wellen erfolgt. Dabei entsteht abhängig von der Frequenz der Lumineszenzstrahlung ein charakteristischer Ausbreitungswinkel der propagierenden Wellen. Die zweite Lumineszenzschicht ist bevorzugt als Pendry-Linse ausgebildet.

Eine Schichtdicke der ersten Lumineszenzschicht beträgt bevorzugt von mindestens 100 nm bis höchstens 500 nm, wobei die Dicke insbesondere von einer Tiefe von Nanokavitäten der nanostrukturierten Oberfläche abhängt. Eine Schichtdicke der zweiten Lumineszenzschicht beträgt bevorzugt von mindestens 30 nm bis höchstens 50 nm.

Alternativ ist bevorzugt vorgesehen, dass die Lumineszenzstruktur als durchgehende, vorzugsweise homogene Lumineszenzschicht ausgebildet ist, welche die nanostrukturierte Oberfläche aufweist. Dabei bedeutet der Begriff "durchgehende" insbesondere, dass innerhalb der Lumineszenzschicht keine Phasengrenze und/oder keine Materialgrenze existiert. Der Begriff "homogene" bedeutet hier insbesondere, dass jedenfalls keine für die hier relevanten Effekte wesentlichen Schwankungen der Zusammensetzung, der Dichte oder einer anderen relevanten physikalischen Eigenschaft innerhalb der Lumineszenzstruktur auftreten, mit Ausnahme der Nanostrukturierung der nanostrukturierten Oberfläche. Eine durchgehende, insbesondere homogene Lumineszenzschicht ist besonders einfach und kostengünstig herstellbar. Die Lumineszenzstruktur ist in diesem Fall insgesamt bevorzugt als Pendry-Linse ausgebildet.

Eine Schichtdicke der als durchgehende Lumineszenzschicht ausgebildeten Lumineszenzstruktur beträgt bevorzugt von mindestens 100 nm bis höchstens 600 nm, vorzugsweise bis höchstens 550 nm, vorzugsweise bis höchstens 500 nm.

Es wird auch ein Ausführungsbeispiel des Sensorelements bevorzugt, das sich dadurch auszeichnet, dass die Trägerstruktur als Trägersubstrat ausgebildet ist. Dabei wird unter einem Trägersubstrat hier insbesondere ein optisch durchlässiges Gebilde, insbesondere eine optisch durchlässige Schicht, verstanden, welche bevorzugt außer der Transparenz und der Fähigkeit, elektromagnetische Strahlung durchzulassen, keine optischen Funktionen aufweist. Insbesondere weist das Trägersubstrat keine über die natürlichen Materialeigenschaften hinausgehenden, gezielt erzeugten Eigenschaften als optisches Brechungs- oder Beugungselement, insbesondere keine diffraktiven Eigenschaften auf. In diesem Fall ist das Sensorelement besonders einfach und kostengünstig ausgestaltet. Eine Optik zur Detektion des Lumineszenzlichts ist in diesem Fall nicht Bestandteil des Sensorelements, sondern vielmehr einer Photolumineszenz-Detektionseinrichtung zuzuordnen, mit welcher das Sensorelement verwendet wird. Das Trägersubstrat kann als einfaches Glassubstrat, insbesondere als Quarzsubstrat, ausgebildet sein.

Alternativ oder zusätzlich ist vorgesehen, dass die Trägerstruktur als diffraktives optisches Trägerelement ausgebildet ist. Dabei wird unter einem Trägerelement hier insbesondere ein Gebilde, insbesondere eine Schicht, verstanden, die einerseits optisch durchlässig ist, andererseits die darüber angeordneten Strukturen, insbesondere die Lumineszenzstruktur und/oder die Fluidführungsstruktur, tragen kann, wobei das optische Trägerelement zugleich als optisches Element, insbesondere zum Zwecke einer Fokussierung oder Bündelung von Lumineszenzstrahlung, ausgebildet ist. Vorzugsweise weist das optische Trägerelement einen hochbrechenden Kunststoff auf oder besteht aus einem hochbrechenden Kunststoff, beispielsweise Polykarbonat. Das in der Lumineszenzstruktur intensivierte und gefilterte Lumineszenzlicht wird dann mithilfe des hochbrechenden, optischen Trägerelements ausgekoppelt und in propagierende Lichtmoden umgewandelt. Es ist möglich, dass das optische Trägerelement eine aufgeprägte, insbesondere heißgeprägte oder lithographisch hergestellte Struktur aufweist. Besonders bevorzugt sind an dem optischen Trägerelement Mikrolinsen ausgebildet, insbesondere durch Heißprägen.

Das optische Trägerelement ist vorzugsweise so ausgebildet, dass Lumineszenzstrahlung von verschiedenen reaktiven Lumineszenzzentren und/oder von verschiedenen zu analysierenden Stoffen, wobei diese verschiedene Frequenzen oder Wellenlängen emittieren, in verschiedene Richtungen abgelenkt wird. Es ist dann möglich, die verschiedenen zu analysierenden Stoffe mittels verschiedener Detektoreinheiten oder in verschiedenen Bereichen eines ortsaufgelösten Detektors, beispielsweise eines CCD- oder CMOS-Sensors, nachzuweisen. Auf diese Weise können mit einem und demselben Sensorelement eine Mehrzahl verschiedener zu analysierende Stoffe zugleich untersucht werden. Um dies zu verwirklichen, wird insbesondere das Material, welches das optische Trägerelement aufweist oder aus welchem das optische Trägerelement besteht und/oder dessen Struktur, in geeigneter Weise gewählt.

Eine Schichtdicke des Trägersubstrats beträgt bevorzugt 1 mm, insbesondere im Fall von Glas als Material für das Trägersubstrat.

Eine Schichtdicke einer diffraktiven Schicht für die Trägerstruktur beträgt bevorzugt von mindestens 5 mm bis höchstens 10 mm. Ist die diffraktive Schicht auf einer Trägerschicht angeordnet, weist letztere vorzugsweise eine größere Dicke auf.

Schließlich wird ein Ausführungsbeispiels des Sensorelements bevorzugt, das sich dadurch auszeichnet, dass die Lumineszenzstruktur wenigstens zwei verschiedene Bereiche aufweist, wobei sich die Bereiche bezüglich der nanostrukturierten Oberfläche und/oder bezüglich der reaktiven Lumineszenzzentren unterscheiden. Es ist also möglich, dass die Lumineszenzstruktur einen ersten Bereich mit einer ersten nanostrukturierten Oberfläche aufweist, und einen zweiten Bereich mit einer zweiten nanostrukturierten Oberfläche, wobei die Nanostruktur der zweiten nanostrukturierten Oberfläche verschieden ist von der Nanostruktur der ersten nanostrukturierten Oberfläche. Alternativ oder zusätzlich ist es möglich, dass die Lumineszenzstruktur einen ersten Bereich mit ersten reaktiven Lumineszenzzentren und einen zweiten Bereich mit zweiten reaktiven Lumineszenzzentren aufweist, wobei die ersten reaktiven Lumineszenzzentren von den zweiten reaktiven Lumineszenzzentren verschieden sind. Auf diese Weise ist es möglich, in verschiedenen Bereichen der Lumineszenzstruktur verschiedene zu analysierende Stoffe nachzuweisen und/oder verschiedene Photolumineszenz-Messungen durchzuführen. Hierdurch wird das Sensorelement besonders flexibel einsetzbar.

Die Aufgabe wird auch gelöst, indem eine Photolumineszenz-Detektionseinrichtung geschaffen wird, welche eine Strahlungsquelle aufweist, die eingerichtet ist zur Emission von elektromagnetischer Strahlung. Die Photolumineszenz-Detektionseinrichtung weist außerdem eine Halteeinrichtung auf, die eingerichtet ist zur lösbaren Halterung eines Sensorelements in einem Strahlengang der Strahlungsquelle, sowie eine Detektoreinrichtung, die eingerichtet ist zur Detektion von elektromagnetischer Strahlung. Die Halteeinrichtung ist dabei eingerichtet, um ein Sensorelement nach einem der zuvor beschriebenen Ausführungsbeispiele im Strahlengang der Strahlungsquelle zwischen der Strahlungsquelle und der Detektoreinrichtung zu halten. Dadurch, dass das Sensorelement von der Halteeinrichtung lösbar gehalten wird, ist es in einfacher, kostengünstiger und schneller Weise möglich, ein Sensorelement in der Photolumineszenz-Detektionseinrichtung gegen ein anderes Sensorelement auszutauschen und so sehr flexibel, kostengünstig und auch in rascher zeitlicher Folge verschiedene Photolumineszenz-Messungen, nämlich insbesondere in Hinblick auf verschiedene zu analysierende Stoffe und/oder in Hinblick auf verschiedene Messtechniken, durchzuführen. Dabei ist es lediglich erforderlich, ein auf die spezifisch zu analysierenden Stoffe oder ein spezifisch anzuwendendes Messverfahren angepasstes Sensorelement an der Halteeinrichtung anzuordnen. Somit verwirklichen sich in Zusammenhang mit der Photolumineszenz-Detektionseinrichtung im Wesentlichen die Vorteile, die bereits in Zusammenhang mit dem Sensorelement erläutert wurden. Es zeigt sich auch, dass die spezifisch für die durchzuführende Messung vorgesehenen Einrichtungen wie ein Analysesystem und ein Filtersystem zur Filterung von Lumineszenzstrahlung in dem Sensorelement implementiert sein können, während die Detektionseinrichtung unspezifisch für eine Vielzahl verschiedener Lumineszenz-Messungen eingerichtet sein kann. Sie wird dann für eine spezifische Messung eingerichtet, indem in auf die spezifische Messung abgestimmtes Sensorelement an der Halteeinrichtung angeordnet wird.

Unter einer Strahlungsquelle wird insbesondere eine Einrichtung verstanden, die eingerichtet ist zur Emission von elektromagnetischer Strahlung, insbesondere in eine vorgegebene Richtung oder einen vorgegebenen Raumwinkel, wobei insbesondere ein vorbestimmter Strahlengang für die elektromagnetische Strahlung durch die Strahlungsquelle vorgegeben ist. Da das Sensorelement ein hocheffizientes, spezifisches Filtersystem für Luminiszenzstrahlung aufweisen kann, ist es nicht nötig, die Strahlungsquelle spezifisch zur Emission einer bestimmten Wellenlänge oder eines bestimmten Wellenlängenbereichs einzurichten. Vielmehr kann es sich in vorteilhafter Weise um eine breitbandige Strahlungsquelle handeln. Bevorzugt ist die Strahlungsquelle eingerichtet zur Emission von sichtbarem Licht, also elektromagnetischer Strahlung im sichtbaren Wellenlängenbereich. Besonders bevorzugt ist die Strahlungsquelle als Breitband-Lichtquelle, insbesondere als Weißlichtquelle, ausgebildet.

Unter einer Halteeinrichtung wird insbesondere eine Einrichtung verstanden, die in der Lage ist, ein Sensorelement an einer räumlich vorbestimmten Position zu halten, insbesondere in lösbarer oder austauschbarer Weise. Es ist möglich, dass die Halteeinrichtung eingerichtet ist, um das Sensorelement zu fixieren, wobei sie vorzugsweise eine Fixierstellung und eine Lösestellung aufweist, in welche sie bedarfsgerecht verlagert werden kann. Es ist aber auch möglich, dass die Halteeinrichtung lediglich eine Auflage für das Sensorelement bereitstellt, auf welche dieses aufgelegt werden kann. Dabei ist es möglich, dass die Halteeinrichtung wenigstens einen Anschlag für das Sensorelement aufweist, vorzugsweise wenigstens zwei schräg oder orthogonal zueinander orientierte Anschläge, um das Sensorelement innerhalb einer Auflageebene eindeutig zu positionieren.

Dass die Halteeinrichtung eingerichtet ist, um das Sensorelement im Strahlengang der Strahlungsquelle zwischen der Strahlungsquelle und der Detektoreinrichtung zu halten, bedeutet insbesondere, dass die Lumineszenzstrahlung des Sensorelements auf dessen der Strahlungsquelle gegenüberliegenden Seite - in Richtung des Strahlengangs gesehen - beobachtet wird. Das Sensorelement teilt insoweit bevorzugt den Raum in zwei Halbräume, wobei ein erster Halbraum bevorzugt oberhalb des Sensorelements und ein zweiter Halbraum bevorzugt unterhalb des Sensorelements angeordnet ist. Die Strahlungsquelle ist beispielsweise in dem ersten Halbraum angeordnet, wobei die Detektoreinrichtung beispielsweise in dem zweiten Halbraum - oder umgekehrt - angeordnet ist. Diese Anordnung ermöglicht eine besonders effiziente Dämpfung des Anregungslichts durch das Sensorelement, wobei nur das Lumineszenzlicht effizient als evaneszente Wellen in die Lumineszenzstruktur eingekoppelt und durch diese an die Trägerstruktur weitergeleitet, verstärkt und von dort wiederum als propagierende Wellen zu der Detektoreinrichtung hin abgegeben wird. Dies gewährleistet ein besonders gutes Verhältnis von Signal zu Rauschen, wobei die Dämpfung des Anregungslichts von der Strahlungsquelle insbesondere durch eine Dicke der Lumineszenzstruktur, insbesondere der Lumineszenzschicht, bestimmt ist und bis zu einem Faktor 10⁻⁵ erreichen kann. Zugleich wird das Luminszenzsignal durch die Lumineszenzstruktur und insbesondere durch die nanostrukturierte Oberfläche sehr effizient intensiviert, sodass es mit dem hier beschriebenen Aufbau ohne weiteres möglich ist, auch schwache Fluorophore zu beobachten, insbesondere mit einer von der Strahlungsquelle emittierten Anregungsintensität, bei welcher eine Beschädigung, Zerstörung oder das vorzeitige Ausbleichen der beobachteten Fluorophore vermieden werden kann.

Unter einer Detektoreinrichtung wird insbesondere eine Einrichtung verstanden, die in der Lage ist, elektromagnetische Strahlung zu detektieren, wobei die Detektoreinrichtung bevorzugt eingerichtet ist zur Detektion von Lumineszenzstrahlung, insbesondere im sichtbaren Bereich.

Es wird ein Ausführungsbeispiel der Photolumineszenz-Detektionseinrichtung bevorzugt, das sich dadurch auszeichnet, dass diese ein Sensorelement gemäß einem der zuvor beschriebenen Ausführungsbeispiele aufweist. Dabei verwirklichen sich in besonderer Weise die bereits zuvor beschriebenen Vorteile.

Es wird auch ein Ausführungsbeispiel der Photolumineszenz-Detektionseinrichtung bevorzugt, das sich dadurch auszeichnet, dass die Detektoreinrichtung eine Kamera aufweist. Dies stellt eine ebenso einfache wie effiziente Ausgestaltung der Photolumineszenz-Detektionseinrichtung dar. Die Kamera weist vorzugsweise eine integrierte Abbildungsoptik auf. Insbesondere weist die Kamera vorzugsweise eine für elektrische Strahlung empfindliche Abbildungsebene und eine Optik auf, die eingerichtet ist, um in die Kamera einfallende elektromagnetische Strahlung auf die Abbildungsebene abzubilden. Bevorzugt ist vorgesehen, dass zwischen einem Eingangselement, das heißt einem ersten Teil der Optik, insbesondere einem Deckglas oder einer Eingangslinse der Kamera, und einer der Kamera zugewandten Stirnfläche der Trägerstruktur ein Immersionsmedium angeordnet ist, beispielsweise Wasser oder ein Immersionsöl, insbesondere ein aus dem Bereich der Mikroskopie bekanntes Immersionsmedium. Das Immersionsmedium wird vorzugsweise so gewählt, dass die Lumineszenzstrahlung beim Übergang in das Immersionsmedium nicht dem Effekt der Totalreflexion unterliegt. Lumineszenzstrahlung mit verschiedenen Wellenlängen wird in verschiedene Richtungen abgelenkt. Diese kann dann in verschiedenen Bereichen der Abbildungsebene abgebildet werden.

Alternativ oder zusätzlich weist die Detektoreinrichtung bevorzugt eine Mehrzahl von versetzt zueinander angeordneten Detektoreinheiten auf. Solche Detektoreinheiten können beispielsweise als separate Kameras oder als separate optische Sensoren ausgebildet sein. Es ist auch möglich, dass die Mehrzahl von versetzt zueinander angeordneten Detektoreinheiten derart realisiert wird, dass ein optischer Sensor vorgesehen ist, der versetzt zueinander angeordnete, getrennt auswertbare separate lichtempfindliche Bereiche aufweist.

Vorzugsweise weist die Photolumineszenz-Detektionseinrichtung eine außerhalb der Detektoreinheiten und getrennt oder separat von diesen angeordnete Abbildungsoptik zur Abbildung von Lumineszenzstrahlung auf Abbildungsebenen der versetzt zueinander angeordneten Detektoreinheiten auf. Besonders bevorzugt weisen die Detektoreinheiten in diesem Fall selbst keine optischen Elemente auf. Es ist möglich, dass zwischen einem ersten optischen Element zur Abbildung auf den Detektoreinheiten und einer diesem optischen Element zugewandten Stirnseite der Trägerstruktur ein Immersionsmedium angeordnet ist. Dieses ist besonders bevorzugt so gewählt, dass die Lumineszenzstrahlung beim Übergang in das Immersionsmedium nicht dem Effekt der Totalreflexion unterliegt und somit Lumineszenzstrahlung verschiedener Wellenlängen in verschiedene Richtungen und insbesondere auf verschiedene der versetzt zueinander angeordneten Detektoreinheiten abgelenkt wird. Auf diese Weise ist es möglich, verschiedene zu analysierende Stoffe und/oder Lumineszenz-Messungen gleichzeitig unter Verwendung der verschiedenen Detektoreinheiten durchzuführen.

Alternativ oder zusätzlich weist die Detektoreinrichtung bevorzugt einen flächigen Detektor auf, besonders bevorzugt einen flächigen Detektor, welcher matrixartig angeordnete, einzeln auswertbare, lichtempfindliche Detektorelemente aufweist. Der flächige Detektor ist besonders bevorzugt als CCD-Sensor oder als CMOS-Sensor ausgebildet. Die Ausgestaltung der Detektoreinrichtung als flächiger Detektor bedeutet eine ebenso einfache wie kostengünstige und sehr effiziente und flexible Ausgestaltung der Detektoreinrichtung.

Besonders bevorzugt ist in diesem Fall die Trägerstruktur als diffraktives optisches Trägerelement ausgebildet, wobei dann die Abbildungsoptik zur Abbildung auf der Abbildungsebene des flächigen Detektors in das Sensorelement integriert ist. Der flächige Detektor selbst weist bevorzugt keine Optik auf. Auch die Photolumineszenz-Detektionseinrichtung weist - mit Ausnahme der in das Sensorelement integrierten Optik - bevorzugt keine Detektionsoptik auf, welche der Detektion von Lumineszenzlicht dient. Besonders bevorzugt ist der flächige Detektor als Halteeinrichtung ausgebildet, sodass das Sensorelement direkt auf den flächigen Detektor aufgelegt werden kann. Dabei liegt insbesondere die Trägerstruktur als diffraktives optisches Trägerelement und somit als Abbildungsoptik unmittelbar auf dem flächigen Detektor auf, sodass das Lumineszenzlicht mit sehr hoher Effizienz und ohne Verluste an der Trägerschicht in propagierende Wellen ausgekoppelt und an den flächigen Detektor weitergeleitet werden kann. Dabei ist das diffraktive optische Trägerelement bevorzugt so ausgebildet, dass Lumineszenzlicht verschiedener Wellenlängen in verschiedene Richtungen abgelenkt wird. Mittels des insbesondere matrixartig bereichsweise separat lokal auswertbaren, flächigen Detektors ist es dann möglich, verschiedene Bereiche des flächigen Detektors für verschiedene analytische Aufgaben und/oder Lumineszenz-Messungen zu nutzen.

Die Aufgabe wird schließlich auch gelöst, indem ein Verfahren zum Betreiben einer Photolumineszenz-Detektionseinrichtung geschaffen wird, welches folgende Schritte aufweist: Es wird ein erstes Sensorelement zwischen einer Strahlungsquelle und einer Detektoreinrichtung angeordnet. Es wird eine erste Photolumineszenz-Messung durchgeführt. Das erste Sensorelement wird entfernt, und ein zweites Sensorelement wird - insbesondere anstelle des ersten Sensorelements - zwischen der Strahlungsquelle und der Detektoreinrichtung angeordnet, und es wird eine zweite Photolumineszenz-Messung durchgeführt. Im Rahmen des Verfahrens kann sehr flexibel zwischen verschiedenen Photolumineszenz-Messungen und/oder verschiedenen zu analysierenden Stoffen und/oder anderen verschiedenen Parametern umgeschaltet werden, in dem das Sensorelement ausgetauscht wird. Das Sensorelement ist dabei bevorzugt ein Einweg- oder Wegwerfelement, welches nach einer Messung entsorgt und durch ein neues Sensorelement ersetzt wird.

Vorzugsweise wird im Rahmen des Verfahrens ein erstes Sensorelement gemäß einem der zuvor beschriebenen Ausführungsbeispiele verwendet. Auch das zweite Sensorelement ist vorzugsweise nach einem der zuvor beschriebenen Ausführungsbeispiele ausgebildet. Im Rahmen des Verfahrens wird weiterhin bevorzugt eine Photolumineszenz-Detektionseinrichtung nach einem der zuvor beschriebenen Ausführungsbeispiele betrieben.

Es wird eine Ausführungsform des Verfahrens bevorzugt, die sich dadurch auszeichnet, dass das zweite Sensorelement von dem ersten Sensorelement verschieden ausgebildet ist, und/oder dass die zweite Photolumineszenz-Messung von der ersten Photolumineszenz-Messung verschieden ist. Dabei können sich die Sensorelemente insbesondere in Hinblick auf die Nanostruktur der nanostrukturierten Oberfläche und/oder in Hinblick auf reaktive Lumineszenzzentren unterscheiden, welche auf der nanostrukturierten Oberfläche angeordnet sind. Die Photolumineszenz-Messungen unterscheiden sich bevorzugt in Hinblick auf zu analysierende Stoffe und/oder in Hinblick auf die Art der Messung oder die verwendeten Messverfahren, wobei sie sich insbesondere in Hinblick auf ausgewertete Wellenlängen unterscheiden können.

Besonders bevorzugt sind Ausführungsformen des Verfahrens, bei denen sowohl das erste von dem zweiten Sensorelement, als auch die erste Photolumineszenz-Messung von der zweiten Photolumineszenz-Messung verschieden gewählt werden.

Die Aufgabe wird auch gelöst, indem ein Verfahren zur Herstellung eines Sensorelements geschaffen wird, welches folgende Schritte umfasst: Es wird eine Trägerstruktur bereitgestellt, auf der Trägerstruktur wird eine Lumineszenzschicht angeordnet, wobei die Trägerstruktur mit einer nanostrukturierten Oberfläche erzeugt wird. Mithilfe des Verfahrens kann in sehr einfacher und kostengünstiger Weise ein Sensorelement hergestellt werden. Besonders bevorzugt wird im Rahmen des Verfahrens ein Sensorelement nach einem der zuvor beschriebenen Ausführungsbeispiele hergestellt.

Bevorzugt wird eine Ausführungsform des Verfahrens, bei welchem die Lumineszenzstruktur auf der Trägerstruktur mittels eines lithographischen Verfahrens und/oder durch einen Prägeprozess angeordnet wird. Insbesondere wird bevorzugt das Sensorelement schichtweise aufgebaut. Insbesondere wird die nanostrukturierte Oberfläche vorzugsweise lithographisch erzeugt, und/oder durch ein Prägeverfahren.

Bevorzugt ist vorgesehen, dass auf der Lumineszenzstruktur eine Fluidführungsstruktur angeordnet wird. Auch die Fluidführungsstruktur wird vorzugsweise lithographisch, und/oder insbesondere schichtweise auf der Lumineszenzstruktur angeordnet.

Im Rahmen des Verfahrens wird bevorzugt wenigstens eine erste Sensorschicht als Trägerstruktur und wenigstens eine zweite Sensorschicht für die Lumineszenzstruktur ausgebildet. Vorzugsweise werden im Rahmen des Verfahrens im Bereich der nanostrukturierten Oberfläche der Lumineszenzstruktur reaktive Lumineszenzzentren angeordnet, insbesondere an der nanostrukturierten Oberfläche immobilisiert, und/oder in einem auf der nanostrukturierten Oberfläche angeordneten Matrixmaterial dispergiert. Besonders bevorzugt werden in der nanostrukturierten Oberfläche Nanokavitäten erzeugt.

Als Trägerstruktur wird bevorzugt ein Trägersubstrat und/oder ein diffraktives optisches Trägerelement verwendet. Es ist möglich, dass insbesondere das diffraktive optische Trägerelement im Rahmen des Verfahrens hergestellt wird, beispielsweise durch lithographische Strukturierung oder durch Heißprägen, insbesondere eines hochbrechenden Kunststoffs. Ganz besonders bevorzugt werden an dem diffraktiven optischen Trägerelement Mikrolinsen, insbesondere durch Heißprägen, erzeugt.

Als Trägersubstrat kann ein einfaches Glas- oder Quarzsubstrat bereitgestellt werden.

Besonders bevorzugt wird im Rahmen des Verfahrens die Lumineszenzstruktur mit wenigstens zwei verschiedenen Bereichen erzeugt, wobei sich die verschiedenen Bereiche bezüglich der nanostrukturierten Oberfläche und/oder bezüglich der reaktiven Lumineszenzzentren unterscheiden können.

Die Aufgabe wird schließlich auch gelöst, indem eine Verwendung eines Sensorelements nach einem der zuvor beschriebenen Ansprüche geschaffen wird. Alternativ oder zusätzlich wird bevorzugt eine Verwendung einer Photolumineszenz-Detektionseinrichtung nach einem der zuvor beschriebenen Ausführungsbeispiele geschaffen. Im Rahmen der Verwendung wird das Sensorelement bevorzugt als Genchip verwendet, und/oder das Sensorelement wird für das ELFA-Verfahren (Enzym Linked Fluorescence Assay) verwendet. Alternativ oder zusätzlich wird das Sensorelement als FRET-Sensor verwendet (Förster Resonance Energy Transfer). Alternativ oder zusätzlich wird das Sensorelement bevorzugt zur Messung von schwachen Fluorophoren verwendet, insbesondere zur Messung von intrinsischer Fluoreszenz von Zielstoffen, bevorzugt ohne Einsatz von Fluoreszenzmarkern.

Eine Verwendung des Sensorelements als Genchip ermöglicht eine High-throughput-Anwendung durch parallele Auswertung, insbesondere für die Charakterisierung markanter genetischer Veränderungen. Dabei kann die Größe eines solchen Genchips mittels des hier vorgeschlagenen Sensorelements deutlich verringert werden. Aufgrund der sehr hohen Verstärkung wird auch weniger Analysematerial benötigt.

Bei dem ELFA-Verfahren handelt es sich um eine fluoreszente Abwandlung des ELISA-Verfahrens (Enzym Linked Immunosorbent Assay). Mit dem hier vorgeschlagenen Sensorelement wird die Größe der Analyseeinheiten und der Probevolumina deutlich reduziert. Der Aufbau der Apparatur wird vereinfacht.

Eine Verwendung des Sensorelements als FRET-Sensor ist sehr gut für quantitative Analysen geeignet. Hauptsächlich für kleinere Moleküle wie beispielsweise Ionen oder Aminosäuren ist diese Verwendung vorteilhaft. FRET-Sensoren sind sehr spezifisch. Sie werden auch zur Untersuchung von Interaktionen zwischen Molekülen eingesetzt. Solche Sensoren werden auch als molekulares Lineal bezeichnet. Aufgrund der durch das vorgeschlagene Sensorelement deutlich intensivierten Fluoreszenz wird die Reichweite solcher Messungen erhöht.

Bei der Verwendung des Sensorelements in Zusammenhang mit der Messung schwacher Fluorophore können diese - vorzugsweise ohne Erhöhung der eingestrahlten Strahlung - untersucht werden, ohne dabei beschädigt, zerstört oder vorzeitig ausgebleicht zu werden. Insbesondere intrinsische Fluorophore sind meistens schwach in ihrer Emission. Durch die Intensivierung der Emission in dem hier vorgeschlagenen Sensorelement können auch schwache Fluorophore gemessen und/oder als Marker genutzt werden, beispielsweise im Rahmen des ELFA-Verfahrens. Vorteile der intrinsischen Fluoreszenz, wie beispielsweise die Möglichkeit, Aussagen über Veränderungen in der Struktur eines gesuchten Stoffes zu machen, können ebenfalls genutzt werden.

Mittels des hier vorgeschlagenen Sensorelements ist es insbesondere möglich, die Empfindlichkeit von Photolumineszenz-Messungen zu steigern, die hierfür notwendigen apparativen Einrichtungen zu verkleinern, die Analysezeit zu verringern und eine Flexibilität und Öffnung hin zu neuen Anwendungen zu erzielen.

Die Beschreibung des Sensorelements und der Photolumineszenz-Detektionseinrichtung, die zusammen auch als Vorrichtungen bezeichnet werden, einerseits, und der Verfahren zum Betreiben einer Photolumineszenz-Detektionseinrichtung sowie zur Herstellung eines Sensorelements, zusammen auch als Verfahren bezeichnet, sowie der Verwendung des Sensorelements und/oder der Photolumineszenz-Detektionseinrichtung, zusammen als Verwendungen bezeichnet, sind komplementär zueinander zu verstehen. Merkmale der Vorrichtungen, die explizit oder implizit in Zusammenhang mit den Verfahren und/oder den Verwendungen beschrieben wurden, sind bevorzugt einzeln oder miteinander kombiniert Merkmale von bevorzugten Ausführungsbeispielen der Vorrichtungen. Verfahrensschritte oder Aspekte der Verwendungen, die explizit oder implizit in Zusammenhang mit den Vorrichtungen beschrieben wurden, sind bevorzugt einzeln oder miteinander kombiniert Schritte oder Aspekte von bevorzugten Ausführungsformen der Verfahren oder der Verwendungen. Diese zeichnet/zeichnen sich bevorzugt durch wenigstens einen Schritt oder Aspekt aus, der durch wenigstens ein Merkmal eines erfindungsgemäßen oder bevorzugten Ausführungsbeispiels einer Vorrichtung bedingt ist. Die Vorrichtungen zeichnen sich bevorzugt durch wenigstens ein Merkmal aus, welches durch wenigstens einen Schritt oder Aspekt einer erfindungsgemäßen oder bevorzugten Ausführungsform der Verfahren oder der Verwendungen bedingt ist.

Die Erfindung wird im Folgenden anhand der Zeichnung näher beschrieben. Dabei zeigen:
- Figur 1: eine schematische Darstellung eines ersten Ausführungsbeispiels einer Photolumineszenz-Detektionseinrichtung;
- Figur 2: eine schematische Darstellung eines zweiten Ausführungsbeispiels einer Photolumineszenz-Detektionseinrichtung;
- Figur 3: eine schematische Detaildarstellung eines Ausführungsbeispiels eines Sensorelements;
- Figur 4: eine schematische Darstellung der Funktionsweise eines Ausführungsbeispiels des Sensorelements.

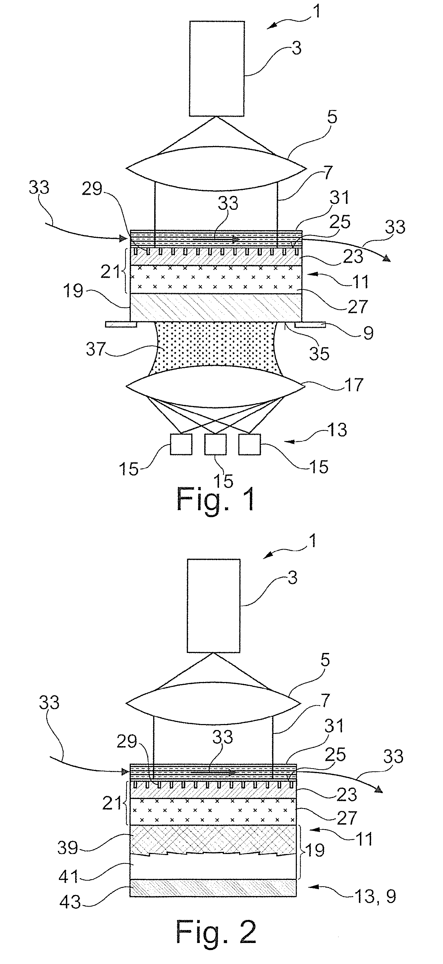

Fig. 1 zeigt eine schematische Darstellung eines ersten Ausführungsbeispiels einer Photolumineszenz-Detektionseinrichtung 1, die eine Strahlungsquelle 3 aufweist. welche eingerichtet ist zur Emission von elektromagnetischer Strahlung. Bevorzugt ist die Strahlungsquelle 3 als Breitband-Lichtquelle zur Emission von elektromagnetischer Strahlung mit sichtbarem Spektrum ausgebildet. Der Strahlungsquelle 3 ist eine Beleuchtungsoptik 5, insbesondere eine Kollimationsoptik, zugeordnet, wobei die Strahlungsquelle 3 und die Beleuchtungsoptik 5 gemeinsam einen Strahlengang 7 für die zur Anregung von Lumineszenz vorgesehene, von der Strahlungsquelle 3 emittierte elektromagnetische Strahlung definieren. Es ist möglich, dass die Beleuchtungsoptik 5 in die Strahlungsquelle 3 integriert ausgebildet ist. Alternativ oder zusätzlich ist es möglich, dass die Beleuchtungsoptik 5 zumindest teilweise oder vollständig separat von der Strahlungsquelle 3 vorgesehen ist.

Es ist eine Halteeinrichtung 9 vorgesehen, die eingerichtet ist, um ein Sensorelement 11 lösbar in dem Strahlengang 7 zu halten. Dabei ist es möglich, dass die Halteeinrichtung 9 eingerichtet ist zur Fixierung des Sensorelements 11. Alternativ ist es möglich, dass die Halteeinrichtung 9 lediglich zur Unterstützung, insbesondere zur Auflage des Sensorelements 11 eingerichtet ist. Es ist möglich, dass die Halteeinrichtung 9 wenigstens einen Anschlag, vorzugsweise zwei, insbesondere senkrecht zueinander orientierte, Anschläge für das Sensorelement 11 zu dessen Anordnung an einer definierten Position innerhalb einer Ebene senkrecht zu einer in Figur 1 vertikal verlaufenden Durchstrahlungsrichtung des Sensorelements 11 zu positionieren.

Die Photolumineszenz-Detektionseinrichtung 1 weist außerdem eine Detektoreinrichtung 13 auf, die eingerichtet ist zur Detektion von elektromagnetischer Strahlung. Die Detektoreinrichtung 13 kann eine Kamera, eine Mehrzahl von versetzt zueinander angeordneten Detektoreinheiten, und/oder einen flächigen Detektor aufweisen. Bei dem hier dargestellten, ersten Ausführungsbeispiel weist die Detektoreinrichtung eine Mehrzahl von versetzt zueinander angeordneten Detektoreinheiten 15 auf.

Der Detektoreinrichtung 13 ist eine Detektionsoptik 17 zugeordnet. Es ist möglich, dass diese in die Detektoreinrichtung 13 integriert oder als Teil der Detektoreinrichtung 13 vorgesehen ist. Alternativ oder zusätzlich ist es möglich, dass die Detektionsoptik 17 zumindest teilweise oder vollständig separat von der Detektoreinrichtung 13 vorgesehen ist. Die Detektionsoptik 17 ist eingerichtet, um Lumineszenzstrahlung aus dem Sensorelement 11 auf die Detektoreinrichtung 13 abzubilden.

Die Beleuchtungsoptik 5 und/oder die Detektionsoptik 17 kann/können als Linsenoptik, als Spiegeloptik und/oder in anderer geeigneter Weise ausgebildet sein.

Das Sensorelement 11 ist eingerichtet für Photolumineszenz-Messungen und weist eine optisch durchlässige Trägerstruktur 19 auf. Bei dem hier dargestellten Ausführungsbeispiel ist die Trägerstruktur 19 als Trägersubstrat ausgebildet, welches - abgesehen von transparenten, lichtdurchlässigen Eigenschaften - keine gezielt erzeugten optischen Eigenschaften, insbesondere keine diffraktiven Eigenschaften, aufweist. Es kann sich bei der Trägerstruktur 19 um ein herkömmliches Substrat, beispielsweise aus Glas, insbesondere Quarzglas, handeln.

Eine Schichtdicke der Trägerstruktur 19 beträgt bevorzugt 1 mm, insbesondere im Fall von Glas als Material für die Trägerstruktur.

Auf der Trägerstruktur 19 ist eine Lumineszenzstruktur 21 angeordnet, die eingerichtet ist zur Intensivierung und Weiterleitung von Lumineszenzlicht an die Trägerstruktur 19.

Insgesamt weist das Sensorelement 11 bei dem hier dargestellten Ausführungsbeispiel einen Schichtaufbau auf, wobei die Trägerstruktur 19 eine erste Sensorschicht bildet, und wobei die Lumineszenzstruktur hier wenigstens eine zweite Sensorschicht, bei dem dargestellten Ausführungsbeispiel konkret zwei Sensorschichten, nämlich zwei Lumineszenzschichten, bildet. Der Schichtaufbau des Sensorelements 11 ist bevorzugt lithographisch und/oder durch einen Prägeprozess herstellbar, insbesondere hergestellt.

Die Lumineszenzstruktur 21 weist eine erste, in Figur 1 obere Lumineszenzschicht 23 auf, welche eine nanostrukturierte Oberfläche 25 aufweist. Weiterhin weist die Lumineszenzstruktur 21 eine zweite Lumineszenzschicht 27 auf, die auf der Trägerstruktur 19 angeordnet ist. Dabei ist die zweite Lumineszenzschicht 27 insbesondere zwischen der ersten Lumineszenzschicht 23 und der Trägerstruktur 19 angeordnet.

Eine Schichtdicke der ersten Lumineszenzschicht 23 beträgt bevorzugt von mindestens 100 nm bis höchstens 500 nm, wobei die Dicke insbesondere von einer Tiefe von Nanokavitäten der nanostrukturierten Oberfläche 25 abhängt. Eine Schichtdicke der zweiten Lumineszenzschicht 27 beträgt bevorzugt von mindestens 30 nm bis höchstens 50 nm.

Alternativ ist es möglich, dass die Lumineszenzstruktur 21 als durchgehende, bevorzugt homogene Lumineszenzschicht ausgebildet ist, welche die nanostrukturierte Oberfläche 25 aufweist.

Zumindest die erste Lumineszenzschicht 23 ist bevorzugt metallisch ausgebildet, mindestens im Bereich der nanostrukturierten Oberfläche 25. Alternativ ist es aber auch möglich, dass die erste Lumineszenzschicht 23 ein anderes Material aufweist, welches geeignet ist, um plasmonische Anregungen aufzuweisen. Generell kann für die Lumineszenzstruktur 21, insbesondere für die erste Lumineszenzschicht 23 und ganz besonders im Bereich der nanostrukturierten Oberfläche 25 jedes Material verwendet werden, welches für plasmonische Anregungen geeignet ist. Besonders bevorzugt weist zumindest die erste Lumineszenzschicht 23 Silber, Gold, Kupfer oder Aluminium auf, oder besteht aus einem der genannten Materialien.

Alternativ oder zusätzlich weist bevorzugt auch die zweite Lumineszenzschicht 27 ein Material auf, welches für plasmonische Anregungen und/oder zur Leitung evaneszenter elektromagnetischer Wellen geeignet ist, insbesondere ein Metall. Auch für die zweite Lumineszenzschicht 27 werden Silber, Gold, Kupfer oder Aluminium als Materialien bevorzugt. Insbesondere ist es möglich, dass die erste Lumineszenzschicht 23 und die zweite Lumineszenzschicht 27 ein gleiches Material aufweisen. Insbesondere dann, wenn die erste Lumineszenzschicht 23 und die zweite Lumineszenzschicht 27 verschiedene Materialien aufweisen, ist zwischen den beiden Lumineszenzschichten 23, 27 bevorzugt eine Zwischenschicht angeordnet.

Weist die Lumineszenzstruktur 21 lediglich eine durchgehende Schicht auf, weist sie bevorzugt ein durchgehendes, gleiches, insbesondere homogenes Material auf, besonders bevorzugt ein für plasmonische Anregungen und zur Durchleitung evaneszenter Wellen geeignetes Material, insbesondere ein Metall, besonders bevorzugt Silber, Gold, Kupfer oder Aluminium, oder sie besteht aus einem der genannten Materialien.

Eine Schichtdicke der als durchgehende Lumineszenzschicht ausgebildeten Lumineszenzstruktur 21 beträgt bevorzugt von mindestens 100 nm bis höchstens 600 nm, vorzugsweise bis höchstens 550 nm, vorzugsweise bis höchstens 500 nm.

Die nanostrukturierte Oberfläche 25 weist hier Nanokavitäten auf, von denen der besseren Übersichtlichkeit wegen hier nur eine Nanokavität mit dem Bezugszeichen 29 bezeichnet ist. Die Nanostruktur der nanostrukturierten Oberfläche, insbesondere die Abmessungen und/oder die Anzahldichte der Nanokavitäten 29 ist/sind bevorzugt abgestimmt auf einen bestimmten Wellenlängenbereich der zu verstärkenden und/oder an die Trägerstruktur 19 weiterzuleitenden Strahlung. Insofern ist das Sensorelement 11 bevorzugt spezifisch auf bestimmte Photolumineszenz-Messungen, insbesondere auf bestimmte Anregungs- und/oder Lumineszenzwellenlängen, abgestimmt. Die Nanokavitäten 29 sind vorzugsweise periodisch oder quasi-periodisch entlang der nanostrukturierten Oberfläche 25 angeordnet.

Im Bereich der nanostrukturierten Oberfläche 25 sind vorzugsweise reaktive Lumineszenzzentren angeordnet, die bevorzugt an der nanostrukturierten Oberfläche 25 immobilisiert und/oder in einem auf der nanostrukturierten Oberfläche angeordneten Matrixmaterial dispergiert sind. Besonders bevorzugt sind die reaktiven Lumineszenzzentren in den Nanokavitäten 29 angeordnet, nämlich entweder dort immobilisiert und/oder in einer dort angeordneten Matrix dispergiert.

Auf der Lumineszenzstruktur 21 ist eine Fluidführungsstruktur 31 angeordnet, die eingerichtet ist zur Führung eines Fluids über die nanostrukturierte Oberfläche, was hier schematisch durch Pfeile 33 angedeutet ist. Vorzugsweise ist die Fluidführungsstruktur als Fluidführungsschicht integral mit dem Schichtaufbau des Sensorelements 11, oder als Teil des Schichtaufbaus des Sensorelements 11 ausgebildet und bevorzugt lithographisch hergestellt. Die Fluidführungsstruktur 31 wird bevorzugt aus einem Kunststoff gebildet. Sie ist vorzugsweise optisch durchlässig, insbesondere also transparent für die Anregungsstrahlung der Strahlungsquelle 3. Es ist möglich, dass die Fluidführungsstruktur 31 hier nicht dargestellte Anschlüsse für das durchzuleitende Fluid aufweist, insbesondere einen Zulauf und einen Ablauf.

Es ist möglich, dass die Lumineszenzstruktur 21 wenigstens zwei verschiedene Bereiche aufweist, insbesondere entlang der nanostrukturierten Oberfläche 25 gesehen, wobei sich die Bereiche bezüglich der Nanostruktur der nanostrukturierten Oberfläche 25 und/oder bezüglich der dort angeordneten reaktiven Lumineszenzzentren unterscheiden können. Es ist dann möglich, verschiedene zu analysierende Stoffe und/oder verschiedene Lumineszenz-Messungen gleichzeitig mit einem Sensorelement 11 durchzuführen.

Die Funktionsweise der Photolumineszenz-Detektionseinrichtung 1 ist generell Folgende: Durch die Fluidführungsstruktur 21 wird ein Fluid, insbesondere eine Lösung, geleitet, welche zu analysierende Zielstoffe umfasst. Diese gelangen bevorzugt in die Nanokavitäten 29 oder zu anderen, vorzugsweise plasmonisch aktiven Strukturelementen der nanostrukturierten Oberfläche 25, wo sie vorzugsweise durch reaktive Lumineszenzzentren - chemisch oder physikalisch - gebunden werden. Durch die von der Strahlungsquelle 3 emittierte Strahlung werden die zu analysierenden Stoffe und/oder die reaktiven Lumineszenzzentren zu Lumineszenz, vorzugsweise zu Fluoreszenz, angeregt, wobei die Anregungsstrahlung durch die Nanostruktur der nanostrukturierten Oberfläche, insbesondere in den Nanokavitäten 29, intensiviert wird. Besonders bevorzugt bilden sich dabei in den Nanokavitäten 29 stehende Wellen der Anregungsstrahlung, welche eine hohe Verstärkung erfahren. Die Lumineszenzstrahlung wird durch die periodische Anordnung der Nanokavitäten 29 in Form evaneszenter Wellen in die Lumineszenzstruktur 21 eingekoppelt, verstärkt und von dieser zu der Trägerstuktur 19 weitergeleitet. Die Anregungsstrahlung der Strahlungsquelle 3 wird dagegen durch die intransparente Lumineszenzstruktur 21 - insbesondere abhängig von der Schichtdicke der Lumineszenzstruktur 21 - gedämpft, wobei insbesondere Dämpfungen von bis zu einem Faktor 10⁻⁵ ohne Weiteres erreichbar sind. Bevorzugt werden die evaneszenten Wellen durch die zweite Lumineszenzschicht 27 verstärkt, wobei gleichzeitig das breitbandige Anregungslicht der Strahlungsquelle 3 gedämpft wird. Am Übergang der Lumineszenzstruktur 21 zu der Trägerstruktur 19 werden die so verstärkten, evaneszenten Wellen als propagierende Lichtmoden ausgekoppelt, wofür bevorzugt die Trägerstruktur 19 ein hochbrechendes Material aufweist.

Zwischen der Trägerstruktur 19, insbesondere zwischen einer der Detektionsoptik 17 zugewandten Oberfläche 35 der Trägerstruktur 19 und der Detektionsoptik 17, ist ein Immersionsmedium 37 angeordnet, welches bevorzugt ebenfalls hochbrechende Eigenschaften aufweist. Bei dem Immersionsmedium 37 kann es sich um Wasser oder um ein Immersionsöl handeln. Bevorzugt sind das Material der Trägerstruktur 19 und/oder das Immersionsmedium 37 so gewählt, dass Lumineszenzstrahlung mit verschiedenen Wellenlängen in verschiedene Richtungen abgelenkt wird ohne dass der Effekt der Totalreflexion auftritt, sodass die verschiedenen Wellenlängen von verschiedenen Detektoreinheiten 15 beobachtbar sind. Es können so also gleichzeitig separat verschiedene Lumineszenz-Messungen durchgeführt werden. Insbesondere ist es auch möglich, von verschiedenen Orten auf der nanostrukturierten Oberfläche stammende Lumineszenzstrahlung verschiedenen Detektoreinheiten 15 zuzuleiten, sodass ohne Weiteres an verschiedenen Orten der nanostrukturierten Oberfläche 25 verschiedene Stoffe analysiert und/oder verschiedene Photolumineszenz-Messungen gleichzeitig durchgeführt werden können.

Das Sensorelement 11 ist vorzugsweise als Einwegelement, insbesondere als Wegwerfelement, ausgebildet. Es ist kostengünstig herstellbar und leicht austauschbar. Dabei weist es insbesondere zugleich ein stoffliches Analysesystem und ein Filtersystem für Lumineszenzstrahlung auf, sodass diese für bestimmte Lumineszenz-Messungen und/oder analytische Aufgaben spezifischen Teile an dem austauschbaren Sensorelement 11 vorgesehen sind. Die Photolumineszenz-Detektionseinrichtung 1 kann dagegen äußerst flexibel für eine Vielzahl verschiedener zu analysierender Stoffe und/oder Photolumineszenz-Messungen geeignet sein, wobei sie für spezifische Untersuchungen eingerichtet wird, indem ein spezifisch hierfür vorgesehenes Sensorelement 11 an der Halteeinrichtung 9 angeordnet wird. Somit kann in kostengünstiger und schneller Weise sehr leicht zwischen verschiedenen Untersuchungsaufgaben gewechselt werden, indem einfach das Sensorelement 11 getauscht wird. Zugleich ergibt sich durch die nanostrukturierte Oberfläche 25 eine sehr schmalbandige, hocheffiziente Intensivierung oder Verstärkung des Anregungslichts in den Nanokavitäten 29, wobei zugleich durch die Lumineszenzstruktur 23 eine hervorragende Dämpfung des Lichts der Strahlungsquelle 3 in Richtung des Detektors gegeben ist. Somit können Lumineszenzlicht und Anregungslicht sauber voneinander getrennt werden, wodurch eine breitbandige Strahlungsquelle 3 nutzbar wird. Es bedarf also keinerlei spezifischen Ausgestaltung der Photolumineszenz-Detektionseinrichtung 1 - mit Ausnahme des Sensorelements 11 - vielmehr wird die gesamte spezifische Funktionalität in das Sensorelement 11 verlagert, welches in kostengünstiger und schneller Weise austauschbar ist. Dadurch ist die Photolumineszenz-Detektionseinrichtung 1 insgesamt äußerst flexibel.

Im Rahmen eines Verfahrens zum Betreiben der Photolumineszenz-Detektionseinrichtung wird insbesondere ein erstes Sensorelement 11 zwischen der Strahlungsquelle 3 und der Detektoreinrichtung 13 angeordnet. Es wird eine erste Photolumincszenz-Messung durchgeführt. Das erste Sensorelement 11 wird entfernt, und es wird ein zweites Sensorelement 11 zwischen der Strahlungsquelle 3 und der Detektoreinrichtung 13 angeordnet, und es wird eine zweite Photolumineszenz-Messung durchgeführt. Dabei unterscheiden sich bevorzugt das erste und das zweite Sensorelement, wobei sich vorzugsweise alternativ oder zusätzlich auch die zweite Photolumineszenz-Messung und die erste Photolumineszenz-Messung unterscheiden. Im Rahmen des Verfahrens wird also die Photolumineszenz-Detektionseinrichtung sehr flexibel und zugleich kostengünstig genutzt.

Fig. 2 zeigt eine schematische Darstellung eines zweiten Ausführungsbeispiels der Photolumineszenz-Detektionseinrichtung 1. Gleiche und funktionsgleiche Elemente sind mit gleichen Bezugszeichen versehen, sodass insofern auf die vorangegangene Beschreibung verwiesen wird.

Bei dem hier dargestellten, zweiten Ausführungsbeispiel ist die Trägerstruktur 19 als diffraktives optisches Trägerelement ausgebildet, weist also selbst gezielt vorgesehene optisch brechende Eigenschaften auf. Bei dem hier konkret dargestellten Ausführungsbeispiel weist die Trägerstruktur 19 eine erste, diffraktive Schicht 39 und eine zweite optisch lediglich transparente, nicht diffraktive Trägerschicht 41 auf. Die diffraktive Schicht 39 und die Trägerschicht 41 sind bevorzugt integral miteinander als Schichtaufbau, insbesondere lithographisch, hergestellt. Es ist aber auch möglich, dass insbesondere die diffraktive Schicht 39 ihre optisch diffraktiven Eigenschaften durch Heißprägen oder durch lithographische Strukturierung erhält. Insbesondere durch Heißprägen können an der diffraktiven Schicht 39 Mikrolinsen angeordnet oder ausgebildet werden. Vorzugsweise besteht die diffraktive Schicht 39 aus einem hochbrechenden Kunststoff. Die Trägerschicht 41 besteht bevorzugt aus einem Kunststoff mit kleiner Brechzahl.

Dabei ist das Material für die Trägerstruktur 19 bevorzugt so gewählt, dass Lumineszenzstrahlung verschiedener Frequenz in verschiedene Richtungen abgelenkt wird ohne dass der Effekt der Totalreflexion auftritt.

Eine Schichtdicke der diffraktiven Schicht 39 beträgt bevorzugt von mindestens 5 mm bis höchstens 10 mm. Die Trägerschicht 41 weist vorzugsweise eine größere, insbesondere eine viel größere Dicke auf.

Die Detektoreinrichtung 13 weist hier einen flächigen Detektor 43 auf, der besonders bevorzugt als CCD-Sensor oder als CMOS-Sensor ausgebildet ist. Dabei ist hier der Detektoreinrichtung 13 keine eigene Detektionsoptik zugeordnet, vielmehr wirkt die Trägerschicht 19 und insbesondere die diffraktive Schicht 39 als Detektionsoptik. Der flächige Detektor 43 beziehungsweise die Detektoreinrichtung 13 sind hier als Halteeinrichtung 9 ausgebildet, wobei das Sensorelement 11 mit der Trägerstruktur 19 und insbesondere mit der Trägerschicht 41 bevorzugt einfach auf den flächigen Detektor 43 aufgelegt wird. Es ist dann möglich, Lumineszenzstrahlung verschiedener Wellenlängen in verschiedenen Bereichen des flächigen Detektors 43, die separat voneinander ausgewertet werden können, zu detektieren. Der flächige Detektor 43 weist vorzugsweise separat auswertbare Pixel auf. Durch Pixel-Binning ist es möglich, die sensitive Fläche des Detektors 43 für jeden Anwendungsfall im Betrieb - vorzugsweise softwaregesteuert - maßzuschneidern. Dabei versteht man unter einem Pixel-Binning ein Zusammenfassen von Pixeln bei der Auswertung und/oder beim Auslesen des flächigen Detektors 43, wobei bevorzugt die von den zusammengefassten Pixeln akkumulierte Ladung aufsummiert wird. Auf diese Weise kann die Lichtempfindlichkeit und somit die Nachweisstärke des flächigen Detektors 43 gesteigert werden, allerdings zu Lasten der Auflösung.

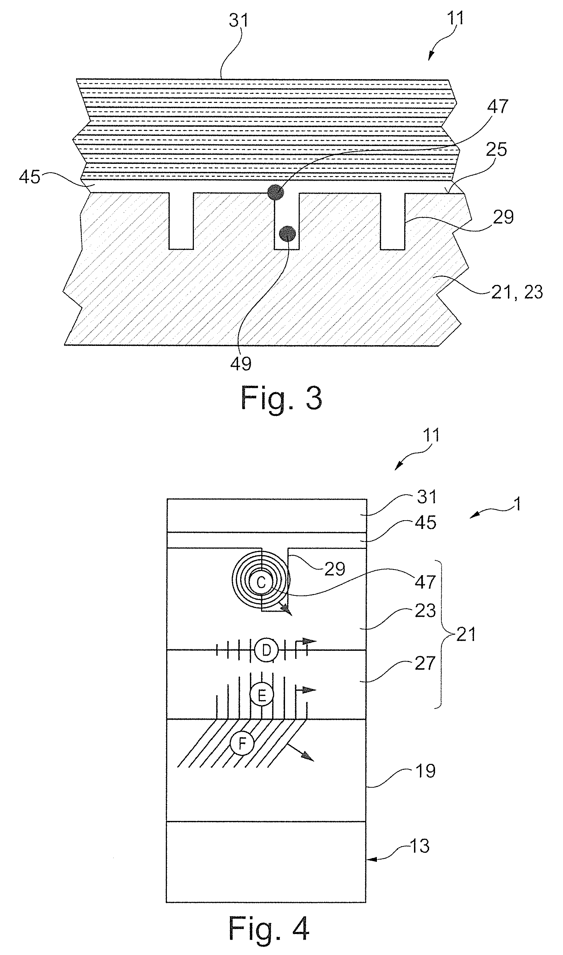

**Fig. 3** zeigt eine schematische Detaildarstellung eines weiteren Ausführungsbeispiels eines Sensorelements 11. Gleiche und funktionsgleiche Elemente sind mit gleichen Bezugszeichen versehen, sodass insofern auf die vorangegangene Beschreibung verwiesen wird. Bei dem hier dargestellten Ausführungsbeispiel ist zwischen der Fluidführungsstruktur 31 und der nanostrukturierten Oberfläche 25 beziehungsweise auch in der nanostrukturierten Oberfläche 25 ein Matrixmaterial 45 angeordnet, welches bevorzugt ein Polymer oder Gel aufweisen oder aus einem Polymer oder Gel bestehen kann. Insbesondere ist das Matrixmaterial 45 bevorzugt eingerichtet, um eine Diffusion von zu analysierenden Stoffen aus dem in der Fluidführungsstruktur 31 strömenden Fluid zu reaktiven Lumineszenzzentren 47, 49 zu ermöglichen. Durch eine geeignete Wahl der Matrixzusammensetzung, also der Zusammensetzung und/oder Ausbildung des Matrixmaterials 45, insbesondere speziellen Porengrößen oder dem Einsatz von polaren Matrix-Molekülen kann auch eine Ionenselektivität des Matrixmaterials 45 eingestellt werden.

Ein erstes, schematisch angedeutetes, reaktives Lumineszenzzentrum 47 ist hier an der nanostrukturierten Oberfläche 25 immobilisiert, vorzugsweise gebunden, wobei ein zweites, hier schematisch dargestelltes, reaktives Lumineszenzzentrum 49 in dem Matrixmaterial 45 dispergiert ist.

**Fig. 4** zeigt eine schematische Darstellung der grundsätzlichen Funktionsweise des Sensorelements 11. Gleiche und funktionsgleiche Elemente sind mit gleichen Bezugszeichen versehen, sodass insofern auf die vorangegangene Beschreibung verwiesen wird. Dabei ist hier bei C ein in einer Nanokavität 29 immobilisiert angeordnetes, erstes reaktives Lumineszenzzentrum 47 dargestellt, welches Lumineszenzstrahlung emittiert. Dies ist insbesondere dann der Fall, wenn an das reaktive Lumineszenzzentrum 47 ein zu analysierender Stoff gebunden ist, vorzugsweise chemisch oder physikalisch. Die von dem reaktiven Lumineszenzzentrum 47 und/oder von dem daran gebundenen Stoff als Welle mit evaneszente Anteilen emittierte Lumineszenzstrahlung wird in die Lumineszenzstruktur 21 und insbesondere in die erste Lumineszenzschicht 23 eingekoppelt, erregt dort Oberflächenplasmonen und wird durch eine resonante Wechselwirkung der vorhandenen Ladungsträger der Material-Grenzflächen an die zweite Lumineszenzschicht 27 weitergeleitet und verstärkt. Dies ist dargestellt einerseits bei D und andererseits bei E. Die zweite Lumineszenzschicht 27 mit ihrem Verstärkungsmechanismus wirkt dabei bevorzugt wie eine Pendry-Linse.

Bei F ist dargestellt, dass die verstärkten evaneszenten Wellen im Übergangsbereich zwischen der zweiten Lumineszenzschicht 27 und der Trägerstruktur 19 als propagierende Lichtmoden ausgekoppelt werden, wobei sie von der Trägerstruktur 19 an die Detektoreinrichtung 13 weitergeleitet werden. Dabei wird vorzugsweise Lumineszenzstrahlung verschiedener Wellenlängen in verschiedene Richtungen gelenkt.

Dadurch, dass in den Nanokavitäten 29 stehende Wellen ausgebildet werden und dass durch die Periodizität der Nanokavitäten auch Oberflächenplasmonen angeregt werden, die starke evaneszente Feldanteile besitzen, können hier Feldverstärkungen von etwa einem Faktor 10 erreicht werden. Diese Verstärkung kann durch spezifische Ausgestaltung der Geometrie der Nanokavitäten 29 auf verschiedene Wellenlängen eingestellt werden und kann insbesondere Halbwertsbreiten von ungefähr 20 nm aufweisen.

Die evaneszente Verstärkung insbesondere in der zweiten Lumineszenzschicht 27 kann auf einen Verstärkungsfaktor von bis zu 200 eingestellt werden. Die Dämpfung des Anregungslichts ist in erster Linie durch die Dicke der Lumineszenzstruktur 21, insbesondere der zweiten Lumineszenzschicht 27 bestimmt und kann bei insgesamt für das Sensorelement 21 vertretbaren Schichtdicken einen Faktor 10⁻⁵ erreichen.

Das Sensorelement 11 wird bevorzugt hergestellt, indem die Trägerstruktur 19 bereitgestellt wird, wobei auf der Trägerstruktur 19 eine Lumineszenzstruktur 21 angeordnet wird, wobei die Lumineszenzstruktur 21 mit einer nanostrukturierten Oberfläche erzeugt wird, und wobei vorzugsweise eine Fluidführungsstruktur 31 auf der Lumineszenzstruktur 21 angeordnet wird. Das Sensorelement 21 und/oder die Photolumineszenz-Detektionseinrichtung 1 werden bevorzugt verwendet für eine Genchipmessung, wobei insbesondere das Sensorelement 11 als Genchip verwendet wird, für die Anwendung der ELFA-Methode, für FRET-Messungen, wobei das Sensorelement als FRET-Sensor verwendet wird, oder zur Messung von schwachen Fluorophoren, insbesondere zur Messung von intrinsischer Fluoreszenz von Zielstoffen, vorzugsweise ohne den Einsatz von Fluoreszenzmarkern.

Insgesamt zeigt sich, dass mittels des Sensorelements 11 ein flexibler Biosensor geschaffen werden kann, der von einer breitbandigen Strahlungsquelle anregbar ist. Einzelne Anregungswellenlängen sind demnach von nur geringer Intensität und müssen verstärkt werden. Dieser Verstärkungsmechanismus verstärkt hier weder das breitbandige Anregungslicht noch Streulicht, sondern durch die ausgeklügelte Anwendung der nanostrukturierten Oberfläche 25 und der Lumineszenzstruktur 21 ausschließlich die spezifisch zur Anregung der Lumineszenz vorgesehene Anregungswellenlänge. Das entstehende Lumineszenzlicht wird ebenfalls verstärkt, gleichzeitig werden aber das verstärkte schmalbandige Anregungslicht, das unverstärkte breitbandige Anregungslicht, und das Streulicht wirksam gedämpft. Dies wird insbesondere durch die Kombination eines plasmonischen Filters mit der evaneszenten Verstärkung einer Pendry-Linsen-Schicht erreicht. Somit werden im Rahmen der hier vorgeschlagenen Vorrichtungen Elemente der Plasmonik, Pendry-Linsen und der geometrischen Optik gemeinsam verwendet, um hochflexible und zugleich äußerst effiziente Photolumineszenz-Messungen durchführen zu können.

## Patentansprüche

1. Sensorelement (11) für Photolumineszenz-Messungen, mit
- einer optisch durchlässigen Trägerstruktur (19), auf der
- eine Lumineszenzstruktur (21) angeordnet ist, die eingerichtet ist zur Intensivierung und zur Weiterleitung von Lumineszenzlicht an die Trägerstruktur (19), wobei
- die Lumineszenzstruktur eine der Trägerstruktur (19) abgewandte, nanostrukturierte Oberfläche (25) aufweist.

2. Sensorelement (11) nach Anspruch 1, **dadurch gekennzeichnet, dass** das Sensorelement (11) einen Schichtaufbau aufweist, wobei die Trägerstruktur (19) wenigstens eine erste Sensorschicht und die Lumineszenzstruktur (21) wenigstens eine zweite Sensorschicht bilden, wobei der Schichtaufbau vorzugsweise lithographisch und/oder durch ein Prägeverfahren herstellbar ist.

3. Sensorelement (11) nach einem der vorhergehenden Ansprüche, **dadurch gekennzeichnet dass** im Bereich der nanostrukturierten Oberfläche der Lumineszenzstruktur (21) reaktive Lumineszenzzentren (47,49) angeordnet sind, die vorzugsweise
a) an der nanostrukturierten Oberfläche (25) immobilisiert, und/oder
b) in einem auf der nanostrukturierten Oberfläche (25) angeordneten Matrixmaterial (45) dispergiert
sind.

4. Sensorelement (11) nach einem der vorhergehenden Ansprüche, **dadurch gekennzeichnet, dass** die nanostrukturierte Oberfläche (25) Nanokavitäten (29) aufweist, wobei vorzugsweise reaktive Lumineszenzzentren (47,49) in den Nanokavitäten (29) angeordnet sind.

5. Sensorelement (11) nach einem der vorhergehenden Ansprüche, **dadurch gekennzeichnet, dass** auf der Lumineszenzstruktur (21) eine Fluidführungsstruktur (31) angeordnet ist, die eingerichtet ist zur Führung eines Fluids über die nanostrukturierte Oberfläche (25).

6. Sensorelement (11) nach einem der vorhergehenden Ansprüche, **dadurch gekennzeichnet, dass** die Lumineszenzstruktur (21)
a) eine erste Lumineszenzschicht (23) aufweist, welche die nanostrukturierte Oberfläche (25) aufweist, wobei die Lumineszenzstruktur (21) eine zweite Lumineszenzschicht (27) aufweist, die auf der Trägerstruktur (19) angeordnet ist, oder
b) als durchgehende, vorzugsweise homogene Lumineszenzschicht ausgebildet ist, welche die nanostrukturierte Oberfläche (25) aufweist.

7. Sensorelement (11) nach einem der vorhergehenden Ansprüche, **dadurch gekennzeichnet, dass** die Trägerstruktur (19)
a) als Trägersubstrat, und/oder
b) als diffraktives optisches Trägerelement
ausgebildet ist.

8. Sensorelement (11) nach einem der vorhergehenden Ansprüche, **dadurch gekennzeichnet, dass** die Lumineszenzstruktur (21) wenigstens zwei verschiedene Bereiche aufweist, wobei sich die Bereiche bezüglich der nanostrukturierten Oberfläche (25) und/oder bezüglich der reaktiven Lumineszenzzentren (47,49) unterscheiden.

9. Photolumineszenz-Detektionseinrichtung (1), mit
- einer Strahlungsquelle (3), eingerichtet zur Emission von elektromagnetischer Strahlung;
- einer Halteeinrichtung (9), eingerichtet zur lösbaren Halterung eines Sensorelements (11) in einem Strahlengang (7) der Strahlungsquelle (3), und
- einer Detektoreinrichtung (13), eingerichtet zur Detektion von elektromagnetischer Strahlung, wobei
- die Halteeinrichtung (9) eingerichtet ist, um ein Sensorelement (11) nach einem der Ansprüche 1 bis 8 im Strahlengang (7) der Strahlungsquelle (3) zwischen der Strahlungsquelle (3) und der Detektoreinrichtung (13) zu halten.

10. Photolumineszenz-Detektionseinrichtung (1) nach Anspruch 9, **dadurch gekennzeichnet, dass** die Photolumineszenz-Detektionseinrichtung (1) ein Sensorelement (11) gemäß einem der Ansprüche 1 bis 8 aufweist.

11. Photolumineszenz-Detektionseinrichtung (1) nach einem der Ansprüche 9 und 10, **dadurch gekennzeichnet, dass** die Detektoreinrichtung (13)
a) eine Kamera,
b) eine Mehrzahl von versetzt zueinander angeordneten Detektoreinheiten (15), und/oder
c) einen flächigen Detektor (43)
aufweist.

12. Verfahren zum Betreiben einer Photolumineszenz-Detektionseinrichtung (1), insbesondere einer Photolumineszenz-Detektionseinrichtung (1) nach einem der Ansprüche 9 bis 11, mit folgenden Schritten:
- Anordnen eines ersten Sensorelements (11), insbesondere eines ersten Sensorelements (11) nach einem der Ansprüche 1 bis 8, zwischen einer Strahlungsquelle (3) und einer Detektoreinrichtung (13);
- Durchführen einer ersten Photolumineszenz-Messung;
- Entfernen des ersten Sensorelements (11) und Anordnen eines zweiten Sensorelements (11) zwischen der Strahlungsquelle (3) und der Detektoreinrichtung (13), und
- Durchführen einer zweiten Photolumineszenz-Messung.

13. Verfahren nach Anspruch 12, **dadurch gekennzeichnet, dass** das zweite Sensorelement (11) von dem ersten Sensorelement (11) verschieden ist, und/oder dass die zweite Photolumineszenz-Messung von der ersten Photolumineszenz-Messung verschieden ist.

14. Verfahren zur Herstellung eines Sensorelements (11), insbesondere eines Sensorelements (11) nach einem der Ansprüche 1 bis 8, mit folgenden Schritten:
- Bereitstellen einer Trägerstruktur (19);
- Anordnen einer Lumineszenzstruktur (21) auf der Trägerstruktur (19), wobei die Lumineszenzstruktur (21) mit einer nanostrukturierten Oberfläche (25) erzeugt wird, und vorzugsweise
- Anordnen einer Fluidführungsstruktur (31) auf der Lumineszenzstruktur (21).

15. Verwendung eines Sensorelements (11) nach einem der Ansprüche 1 bis 8 und/oder einer Photolumineszenz-Detektionseinrichtung (1) nach einem der Ansprüche 9 bis 11:
- als Genchip;
- für die ELFA-Methode;
- als FRET-Sensor, und/oder
- zur Messung von schwachen Fluorophoren, insbesondere zur Messung von intrinsischer Fluoreszenz von Zielstoffen, insbesondere ohne Einsatz von Fluoreszenzmarkern.
